# FASCICULE DE BREVET EUROPEEN

(11) **EP 1 993 057 B1**
(45) Date de publication et mention de la délivrance du brevet: **20.10.2010**
(21) Numéro de dépôt: 08156078.1
(22) Date de dépôt: 13.05.2008
(51) Int. Cl.: G06F 21/02, G06F 21/00

(54) **Détection d'une perturbation d'état d'une bascule d'un circuit électronique**
Erkennung einer Zustandsstörung eines bistabilen Kippschalters eines elektronischen Schaltkreises
Detection of a status disruption of a flip-flop of an electronic circuit

(30) Priorité: 18.05.2007 FR 0755126
(43) Date de publication de la demande: 19.11.2008
(73) Titulaire: STMicroelectronics (Rousset) SAS, 13790 Rousset (FR)
(72) Inventeur: Bancel, Frédéric, 13113 Lamanou (FR); Hely, David, 13120 Gardanne (FR); Berard, Nicolas, 13530 Trets (FR)
(74) Mandataire: de Beaumont, Michel

(56) Documents cités:
- EP-A- 1 571 522
- HAGAI BAR-EL ET AL: "The Sorcerer's Apprentice Guide to Fault Attacks" INTERNET CITATION, [Online] 7 mai 2004 (2004-05-07), XP002329915 Extrait de l'Internet: URL:http://web.archive.org/web/20041016071 838/eprint.iacr.org/2004/100> [extrait le 2005-05-27]

## Description

### Domaine de l'invention

La présente invention concerne de façon générale les circuits électroniques et plus particulièrement, les circuits électroniques au moins partiellement numériques exploitant des états de bascules.

L'invention s'applique plus particulièrement à la détection d'une modification de l'état d'une bascule entre deux instants de mise à jour.

### Exposé de l'art antérieur

Des états logiques traités par un circuit numérique peuvent subir des perturbations accidentelles ou provoquées. Une perturbation provoquée consiste, par exemple, à perturber localement le fonctionnement du circuit (par exemple, au moyen d'un laser), de sorte à forcer un ou plusieurs éléments logiques (typiquement des bascules) à changer d'état. De telles perturbations sont généralement appelées "injections de fautes". Les résultats d'attaques par injection de fautes sont exploités par des mécanismes d'analyse, par exemple du type connu sous la dénomination DFA (Differential Fault Analysis).

Perturber l'état fourni par un élément logique de type bascule peut engendrer un dysfonctionnement plus global du circuit. Par exemple, cela peut perturber le fonctionnement d'un algorithme de cryptographie dans le but de découvrir des quantités secrètes manipulées. Selon un autre exemple, cela peut permettre au circuit de se placer dans un état en principe non autorisé (par exemple, en mode test).

Les dysfonctionnements d'une bascule peuvent être de nature dynamique ou statique. Les dysfonctionnements dynamiques proviennent de décalages du signal d'horloge (glitch) ou de modification de l'arbre d'horloge. Les dysfonctionnements statiques auxquels s'applique la présente invention sont par exemple produits par des attaques de type laser pour provoquer un changement d'état de sortie d'une ou plusieurs bascules sans qu'il y ait besoin d'un front de signal déclencheur pour prendre en compte ce changement d'état.

Il serait souhaitable de pouvoir détecter un éventuel changement d'état anormal d'une ou plusieurs bascules dans un circuit intégré, que ce changement d'état soit accidentel ou provoqué.

Le document EP-A-1 571 522 décrit un dispositif de protection contre l'injection d'erreurs dans un bloc logique asynchrone d'un module logique élémentaire et prévoit d'exploiter la combinaison logique des données fournies par deux bascules d'un circuit de détection dont les entrées de donnée respectives reçoivent un état et son inverse fournis par un bloc de codage et dont les entrées de déclenchement respectives reçoivent un signal d'horloge.

### Résumé de l'invention

Pour atteindre tout ou partie de ces objets ainsi que d'autres, il est prévu un procédé de détection d'une perturbation d'un état d'au moins une première bascule d'un groupe de plusieurs premières bascules d'un circuit électronique, dans lequel :
les sorties respectives des premières bascules du groupe sont, indépendamment de leur destination fonctionnelle, combinées pour fournir un signal et son inverse, déclenchant deux deuxièmes bascules dont des entrées de donnée sont forcées dans un même état, les sorties respectives des deuxièmes bascules étant combinées pour fournir le résultat de la détection ; et
un signal impulsionnel comportant une impulsion au moins à chaque front de déclenchement d'une des premières bascules du groupe initialise les deuxièmes bascules.

Selon un mode de mise en oeuvre de la présente invention, la combinaison des sorties des premières bascules est de type OU-Exclusif.

Selon un mode de mise en oeuvre de la présente invention, le signal d'initialisation des deuxièmes bascules est un train d'impulsions périodique.

Selon un mode de mise en oeuvre de la présente invention, le signal d'initialisation est de même période qu'un signal de déclenchement commun aux premières bascules.

Selon un mode de mise en oeuvre de la présente invention, la durée des impulsions du signal d'initialisation des deuxièmes bascules est au moins égale au temps d'établissement des premières bascules majoré du temps de combinaison de leurs signaux de sortie.

Il est également prévu un circuit d'une détection d'une perturbation d'état d'au moins une première bascule d'un groupe de premières bascules, dans lequel :
un premier élément de combinaison logique des sorties respectives des bascules du groupe, indépendamment de la fonction donnée à ces bascules ;
deux deuxièmes bascules d'exploitation du résultat de la combinaison logique recevant, sur leurs entrées de déclenchement respectives, un signal résultat de la combinaison logique et son inverse et, sur leur entrées de donnée respectives, un même état ; et
un deuxième élément de combinaison logique des sorties respectives des deux deuxièmes bascules.

Selon un mode de réalisation, le premier élément de combinaison effectue une combinaison de type OU-Exclusif.

Selon un mode de réalisation, le deuxième élément de combinaison effectue une combinaison de type OU.

Selon un mode de réalisation, le signal d'initialisation est un train d'impulsions périodique de même période que le signal de déclenchement des premières bascules.

Il est également prévu un circuit électronique comportant un circuit de détection.

### Brève description des dessins

Ces objets, caractéristiques et avantages, ainsi que d'autres seront exposés en détail dans la description suivante de modes de mise en oeuvre et de réalisation particuliers faite à titre non-limitatif en relation avec les figures jointes parmi lesquelles :
la figure 1 représente une carte à puce du type à laquelle s'applique à titre d'exemple la présente invention ;
la figure 2 est un schéma-blocs d'un mode de réalisation d'un circuit électronique ;
la figure 3 est un schéma simplifié d'une bascule ;
les figures 4A, 4B et 4C sont des chronogrammes illustrant un exemple de perturbation du fonctionnement de la bascule de la figure 3 ;
la figure 5 est un schéma-blocs fonctionnel d'un mode de réalisation ;
la figure 6 est un mode de réalisation détaillé d'un circuit de détection d'un changement anormal d'état d'une ou plusieurs bascules ; et
les figures 7A, 7B, 7C, 7D, 7E, 7F, 7G, 7H, 7I, 7J et 7K illustrent le fonctionnement du circuit de la figure 6.

De mêmes éléments ont été désignés par de mêmes références aux différentes figures dont les chronogrammes ont été tracés sans respect d'échelle.

### Description détaillée

Par souci de clarté, seuls les éléments qui sont utiles à la compréhension de l'invention ont été représentés et seront décrits. En particulier, les fonctions remplies par les bascules dont l'état est surveillé n'ont pas été illustrées, l'invention étant compatible avec toute exploitation habituelle de résultats fournis par des bascules. De même, l'exploitation faite du signal de détection n'a pas été détaillée, l'invention étant là encore compatible avec toute contre-mesure ou exploitation d'un signal de détection d'un dysfonctionnement du circuit intégré, notamment suite à une attaque par injection de faute.

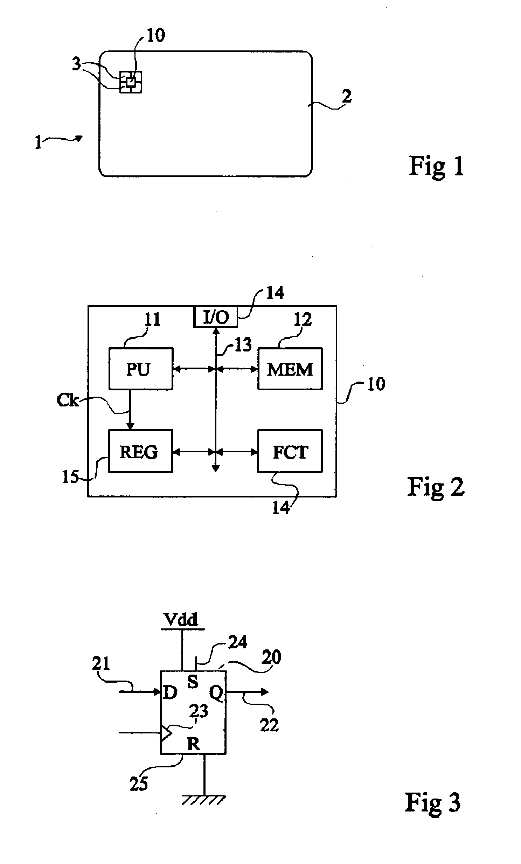

La figure 1 représente, de façon très schématique, une carte à puce 1 du type à laquelle s'applique à titre d'exemple la présente invention. Une telle carte est, par exemple, constituée d'un support 2 en matière plastique dans ou sur lequel est rapportée une puce 10 de circuit électronique susceptible de communiquer avec l'extérieur au moyen de contacts 3 ou au moyen d'éléments (non représentés) d'émission-réception sans contact. Le circuit 10 de la carte contient une unité de traitement dont au moins une fonction logique exploite des états fournis par plusieurs bascules.

Selon un autre exemple, l'invention s'applique à des systèmes de télédiffusion à accès contrôlé. Dans un tel exemple, une antenne reçoit des signaux provenant d'un satellite qu'elle transmet à un décodeur pour affichage sur un téléviseur. Le décodeur comporte une ou plusieurs cartes électroniques pourvues d'un ou plusieurs circuits de traitement numérique de données reçues. Ce traitement consiste en un décodage (déchiffrement) au moyen d'une ou plusieurs clés que possède le décodeur. Ces clés sont contenues dans des mémoires associées au circuit électronique ou sur un élément externe, par exemple, une carte à puce introduite dans le décodeur. Les traitements numériques effectués sur la base des clés exploitent des registres de mémorisation temporaire formés de bascules.

Selon les circuits et applications, un ensemble de bascules peut, par exemple, former un compteur. Selon un autre exemple, une bascule contient un bit conditionnant l'accès à une fonction du circuit. Selon encore un autre exemple, plusieurs bascules forment un registre de stockage temporaire d'une variable, par exemple utilisée par un algorithme et faisant intervenir une clé de chiffrement ou de déchiffrement.

La figure 2 est un schéma-blocs d'un mode de réalisation d'un circuit électronique 10. Ce circuit comporte une unité de traitement 11 (PU) capable, par exemple, d'exécuter des programmes contenus dans une ou plusieurs mémoires 12 (MEM), par exemple, une mémoire non volatile non reprogrammable, une mémoire non volatile reprogrammable, et une mémoire vive. Un ou plusieurs bus 13 de données, d'adresses et de commandes servent de support de communication entre les différents constituants du circuit 10 et avec une interface 14 (I/O) d'entrée/sortie pour communication avec ou sans contact avec l'extérieur. Le plus souvent, le circuit 10 comporte d'autres fonctions (bloc 14, FCT) dépendant de l'application. Il s'agit, par exemple, d'une cellule de calcul cryptographique dédiée pour mettre en oeuvre des algorithmes de chiffrement et de déchiffrement. De tels algorithmes exploitent des éléments de mémorisation temporaire 15 (par exemple, des registres REG) affectés à l'unité 11 et/ou à la cellule 14. Ces registres sont réalisés au moyen d'une ou plusieurs bascules selon le nombre de bits mémorisés. Un ou plusieurs signaux (par exemple, un signal d'horloge Ck) de déclenchement ou de synchronisation des changements d'état des registres est fourni, par exemple, par l'unité de traitement 11.

La figure 3 représente le schéma d'une bascule 20 constitutive d'un bit d'un registre. Cette bascule transfère une valeur (0 ou 1) présente sur une borne 21 d'entrée D de donnée vers une borne 22 de sortie directe Q (ou l'inverse de la donnée vers une borne non représentée de sortie inverse). Le transfert est effectué à chaque front (par exemple montant) d'un signal appliqué sur une borne 23 de déclenchement. La bascule est alimentée par une tension continue Vdd dont les potentiels conditionnent les niveaux des états 0 et 1. La bascule est susceptible d'être initialisée (forcée) à l'état 1 ou à l'état 0 par application d'un signal sur une borne 24 (S) de mise à un (SET) ou sur une borne 25 (R) de réinitialisation à zéro (RESET).

Pour un registre sur plusieurs bits, plusieurs bascules 20 sont utilisées en parallèle.

Selon un autre exemple appliqué à un compteur, plusieurs bascules dont les sorties respectives Q fournissent les différents bits du compteur sont montées en cascade. Pour un compteur synchrone, les états de sortie des bascules de rangs précédents sont fournis en entrée D des bascules de rangs suivants, le cas échéant en étant combinées par une porte ET avec le résultat de la bascule de rang encore précédent, et toutes les bascules sont déclenchées par un même signal. Pour un compteur asynchrone, seule la première bascule reçoit un signal déclencheur, chaque autre bascule étant déclenchée par la sortie de la bascule de rang précédent et toutes les entrées 21 des bascules recevant un niveau haut.

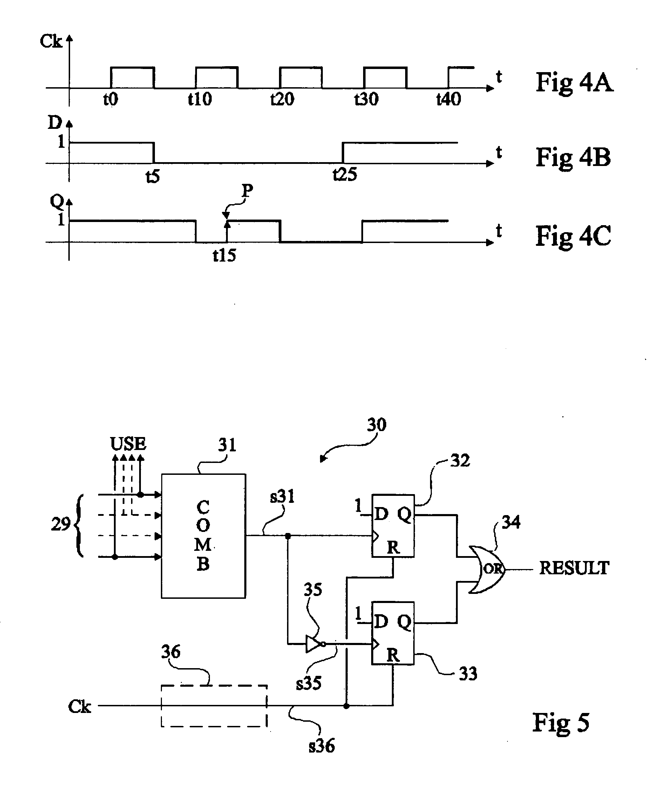

Les figures 4A, 4B, et 4C illustrent le fonctionnement d'une bascule 20 lors d'un changement d'état. La figure 4A représente un exemple d'allure d'un signal d'horloge Ck servant de signal de déclenchement. La figure 4B représente un exemple d'allure du signal présent en entrée D de la bascule. La figure 4C représente l'allure correspondante du signal fourni en sortie Q de cette bascule. On suppose que la prise en compte de l'état d'entrée est effectuée à chaque front montant t0, t10, t20, t30 et t40 du signal Ck mais un déclenchement sur front descendant est également possible. En figure 4B, on suppose un signal D initialement à l'état haut (1) qui retombe à l'état 0 à un instant t5 et remonte à l'état 1 à un instant t25. Le signal Q (figure 4C) initialement à l'état 1 passe à l'état 0 à l'instant t10 qui suit le front descendant du signal D. La remontée du signal D à l'instant t25 entre les instants t20 et t30 est suivie, à l'instant t30, d'un basculement de l'état de la sortie Q à l'état 1. Si une perturbation p se produit à un instant t15 intermédiaire entre les instants t10 et t20 et provoque une mise à l'état 1 du signal Q, cet état 1 subsiste jusqu'au front montant suivant (instant t20) du signal Ck où le niveau de l'entrée de donnée D est à nouveau pris en compte.

On voit donc qu'entre deux fronts de même sens du signal de déclenchement, entre lesquels l'état de la sortie Q de la bascule est censé rester stable (entre deux instants de prise en compte du niveau sur l'entrée D), il existe un risque de dysfonctionnement accidentel ou provoqué. En effet, un changement d'état sur la sortie Q de la bascule risque d'être ensuite interprété de façon erronée par les circuits logiques exploitant ce bit.

Parmi les contre-mesures, applicables aux dysfonctionnements de type statique, on utilise parfois des calculs de parité sur l'entrée des registres que l'on stocke dans un autre registre. Le contenu de cet autre registre est comparé au calcul de parité effectué sur la sortie des registres. Un inconvénient est le coût en surface (de l'ordre de 20 % de la surface des bascules prises en compte).

La figure 5 est un schéma-blocs d'un mode de réalisation d'un circuit 30 détecteur d'un changement d'état d'une bascule pendant la période où sa sortie est censée rester stable, c'est-à-dire entre deux fronts successifs du signal déclenchant les changements d'état.

Le mode de réalisation représenté en figure 5 consiste à combiner (bloc 31, COMB) les états respectifs des sorties de plusieurs bascules d'un groupe 29 de bascules, indépendamment de l'utilisation (USE) faite de ces états par le reste du circuit électronique. Par conséquent, le détecteur 30 a un fonctionnement indépendant de l'utilisation des états des bits fournis par les bascules. Dans l'exemple représenté, toutes les bascules d'un même groupe sont déclenchées par un même signal périodique. En variante, le signal n'est pas périodique et/ou tout ou partie des bascules du groupe sont déclenchées par des signaux différents.

La combinaison opérée par le circuit 31 fournit, dans cet exemple, un résultat (s31) qui est envoyé sur les entrées d'horloge respectives de deux bascules 32 et 33 dont les sorties directes Q (ou inverses) respectives sont combinées par une porte 34 de type OU (OR) fournissant le résultat (RESULT) de la détection. La bascule 32 reçoit le signal s31 direct tandis que la bascule 33 le reçoit inversé (inverseur 35). La fonction d'inversion peut être obtenue en prélevant directement une sortie inverse du circuit 31. Les entrées de donnée D des deux bascules 32 et 33 sont forcées dans le même état, par exemple haut (1).

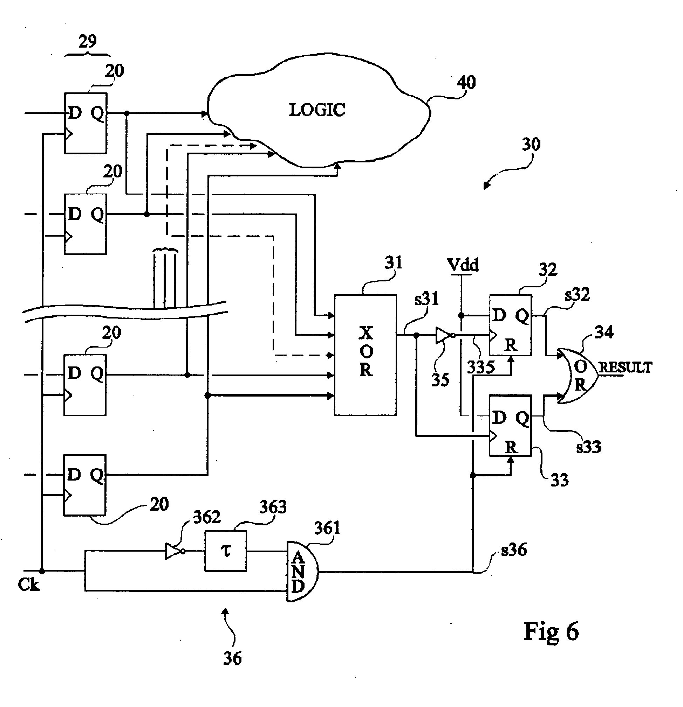

Les deux bascules 32 et 33 reçoivent, sur leurs entrées R de réinitialisation respectives, un signal impulsionnel s36 comportant un front d'activation de la réinitialisation au moins à chaque front déclencheur d'une des bascules 20 du groupe 25. Ce signal s36 est, de préférence, généré par un circuit 36 (en pointillés en figure 5 pour souligner son caractère optionnel) à partir d'un signal périodique commun Ck de déclenchement des bascules 20. Le signal 36 comporte des impulsions synchrones avec le signal Ck, préférentiellement de largeur inférieure à la demi-période du signal Ck et, de préférence, les plus courtes possibles. Dans l'exemple de la figure 6, le circuit de génération du train d'impulsions 36 comporte deux voies parallèles de combinaison du signal Ck au moyen d'une porte 361 de type ET (AND), dont la sortie s36 est fournie aux entrées R des bascules 32 et 33. Une entrée de la porte 361 reçoit le signal Ck et l'autre entrée reçoit l'inverse (inverseur 362) du signal Ck, retardé (retardateur 363) d'une durée τ déterminée. La durée τ fixe la durée des impulsions du signal s36. Elle est choisie pour être supérieure au temps d'établissement des bascules dont on surveille le comportement majoré du temps de propagation dans le circuit 31.

La figure 6 représente un exemple plus détaillé de détecteur 30. Toutes les bascules 20 du groupe 29 fournissent leurs états de sortie respectifs à un ou plusieurs circuits logiques 40 d'exploitation, indépendants du circuit de détection 30. Ces sorties sont par ailleurs envoyées sur un circuit 31 de combinaison, dans cet exemple, réalisant une fonction de type OU-Exclusif (XOR) de l'ensemble des états fournis par les bascules 20. La sortie s31 du circuit 31 est exploitée de façon similaire à celle décrite en relation avec la figure 5 (par rapport à la figure 5, la figure 6 illustre une variante dans laquelle le signal s31 est envoyé directement sur la bascule 33 et, après inversion 35, sur la bascule 32, ce qui ne change rien au fonctionnement).

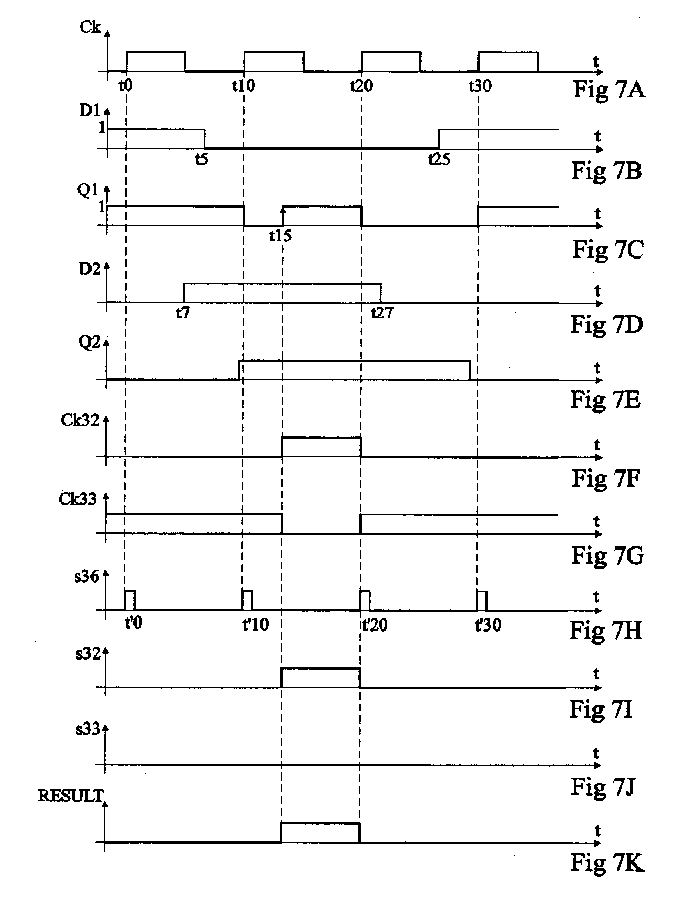

Les figures 7A, 7B, 7C, 7D, 7E, 7F, 7G, 7H, 7I, 7J et 7K sont des chronogrammes illustrant le fonctionnement du détecteur 30 de la figure 6. Les figures 7A, 7B et 7C sont à rapprocher des figures 4A, 4B et 4C en prenant pour exemple une première bascule du groupe 29 (entrée D1, sortie Q1) dont la sortie subit un changement d'état anormal à l'instant t15. Une deuxième bascule, dont les entrée D2 et sortie Q2 respectives sont illustrées à titre d'exemple aux figures 7D et 7E, fait partie du groupe 29. Pour simplifier la description, on limite l'exemple à deux bascules. Les figures 7F et 7G illustrent les états respectifs des signaux de déclenchement Ck32 et Ck33 des bascules 32 et 33 du détecteur 30. La figure 7H illustre l'allure du signal s36 généré par le circuit 36. Les figures 7I et 7G illustrent les états respectifs des signaux s32 et s33 des sorties directes (Q) des bascules 32 et 33. La figure 7K illustre l'allure du signal de détection RESULT fourni par la porte 34.

On suppose que l'entrée D2 de la deuxième bascule à surveiller passe à l'état 1 à un instant t7 avant le front t10 du signal Ck. Par conséquent, sa sortie Q2 commute à l'état haut à l'instant t10. Puis, on suppose une remise à zéro du signal de sortie Q2 de cette bascule à l'instant t30 suite à un changement d'état à un instant t27 de son entrée D2 entre les instants t20 et t30.

Le signal s36 de réinitialisation des bascules 32 et 33 correspond à un train d'impulsions de courtes durées dont les fronts montants correspondent à ceux du signal Ck et dont les fronts descendants respectifs t'0, t'10, t'20, t'30, etc. sont légèrement retardés par rapport aux instants t0, t10, t20 et t30, etc. Ce signal sert à inhiber périodiquement la détection pendant les plages temporelles où les bascules changent d'état en fonctionnement normal et pendant que le circuit logique 31 propage l'information.

En l'absence de perturbation, les signaux Ck32 et Ck33 sont stables à l'état haut sous l'effet de la combinaison de type OU-Exclusif 31 des sorties Q1 et Q2. Aucun changement d'état ne se produit sur les sorties s32 et s33 des bascules 32 et 33. Par conséquent, la combinaison par la porte 34 de ces résultats fournit un état zéro permanent.

En cas de perturbation (instant t15, figure 7C), le basculement des signaux Ck32 et Ck33 provoque, à l'instant t15, un basculement vers l'état haut de la sortie s32 jusqu'à l'instant t20. Il en découle un créneau à l'état 1 du signal RESULT entre les instants t15 et t'20.

Ce qui vient d'être exposé pour un exemple de deux bascules se transpose quel que soit le nombre de bascules surveillées par la combinaison 31. En effet, un changement d'état de la sortie s31 provoqué par un fonctionnement normal se produit avant le front descendant (instant t') du signal s36. Par conséquent, l'inversion des états entre les signaux Ck32 et Ck 33 ne déclenchera pas de basculement d'une des sorties s32 et s33 et le signal RESULT restera stable à l'état bas. Par contre, tout changement d'état entre deux impulsions du signal s36 provoque immédiatement (après propagation dans le circuit 30) un basculement du signal RESULT.

Un avantage des modes de réalisation décrits est qu'il est désormais possible de vérifier la stabilité d'un signal entre deux commutations pour détecter un éventuel dysfonctionnement.

Un autre avantage est que la logique utilisée pour le détecteur prend peu de place par rapport à un calcul de parité.

Le nombre de bascules prises en compte par un même circuit de détection résulte d'un compromis entre le temps de propagation des états logiques dans l'élément 31 qui conditionne la période "aveugle" (la durée minimale des impulsions du signal s36) et l'encombrement du circuit de détection. Un nombre de bascules 20 compris entre 8 et 32 constitue un bon compromis.

A titre d'exemple particulier de réalisation, on choisira un retard τ compris entre 1,5 et 4 nanosecondes.

Il n'est pas nécessaire de surveiller tous les bits de tous les registres du circuit intégré. De préférence, on sélectionne les registres les plus sensibles. Par exemple, on choisit les registres par lesquels transitent des clés cryptographiques, ou des registres de positionnement d'un mode de fonctionnement du circuit, par exemple un mode de fonctionnement sécurisé.

Des modes de réalisation particuliers ont été décrits. Diverses variantes et modifications apparaîtront à l'homme de l'art. En particulier, le choix du nombre de bascules prises en compte par un même circuit de détection dépend du compromis indiqué dans la présente description et sera choisi en fonction des besoins de l'application.

De plus, d'autres signaux s36 impulsionnels de réinitialisation ou de mise à 1 des bascules 32 et 33 du circuit de détection pourront être envisagés. Par exemple, si tous les signaux surveillés sont des signaux dont l'état varie peu (par exemple, des signaux de mode de fonctionnement (test, utilisateur, etc.)) et dont les commutations sont synchrones avec un signal d'horloge Ck, le circuit 36 peut être omis. Les périodes à l'état haut du signal d'horloge Ck peuvent alors constituer les impulsions d'initialisation des bascules. Quelle que soit la durée de ces périodes à l'état haut, le circuit de détection fournira un résultat fiable de détection au bout d'au plus une demi-période du signal Ck, ce qui suffit pour un changement d'état peu fréquent des signaux à surveiller.

En outre, le signal s36 peut ne pas être périodique mais être obtenu en combinant (par exemple par une logique de type OU) les signaux de déclenchement des bascules 20 du groupe 29 pour présenter une impulsion à chaque front déclencheur d'une de ces bascules. Le circuit de détection 30 présente alors une période "aveugle" à chaque front de déclenchement normal d'une des bascules du groupe 29.

Enfin, les bascules 32 et 33 pourront avoir leurs entrées de donnée respectives forcées à l'état bas plutôt qu'à l'état haut. Dans ce cas, le signal Ck est utilisé non pas pour réinitialiser les bascules mais pour les initialiser (mise à 1) en étant appliqué à des bornes de mise à un (SET) des bascules.

## Revendications

1. Procédé de détection d'une perturbation d'un état d'au moins une première bascule (20) d'un groupe (29) de plusieurs premières bascules d'un circuit électronique (10) comportant les étapes suivantes:
- une étape de combinaison des sorties respectives de premières bascules du groupe, indépendamment de leur destination fonctionnelle, pour fournir un signal (s31) et son inverse;
- une étape de combinaison des sorties respectives de deux deuxièmes bascules pour fournir un signal résultat de la détection;
**caractérisé en ce:**
- **que** ladite étape de combinaison des sorties respectives des premières bascules du groupe provoque un changement d'état desdits signal (s31) et son inverse lors d'une perturbation desdites premières bascules;
- **que** lesdits signal (s31) et son inverse fournis déclenchent lesdites deuxièmes bascules;
- **qu'**il comporte une étape de forçage dans un même état des entrées de donnée desdites deuxièmes bascules;
- **qu'**il comporte une étape d'initialisation desdites deuxièmes bascules à l'aide d'un signal impulsionnel (s36) comportant une impulsion au moins à chaque front de déclenchement d'une des premières bascules du groupe;
- **que** ladite étape de combinaison des sorties respectives des deuxièmes bascules est effectuée par une fonction logique de type OU (34).

2. Procédé selon la revendication 1, dans lequel la combinaison (31) des sorties des premières bascules (20) est de type OU-Exclusif.

3. Procédé selon la revendication 1 ou 2, dans lequel le signal (s36) d'initialisation des deuxièmes bascules (32,33) est un train d'impulsions périodique.

4. Procédé selon la revendication 3, dans lequel le signal (s36) d'initialisation est de même période qu'un signal (Ck) de déclenchement commun aux premières bascules (20).

5. Procédé selon l'une quelconque des revendications 1 à 4, dans lequel la durée des impulsions du signal (s36) d'initialisation des deuxièmes bascules (32, 33) est au moins égale au temps d'établissement des premières bascules (20) majoré du temps de combinaison de leurs signaux de sortie.

6. Circuit (30) de détection d'une perturbation d'état d'au moins une première bascule (20) d'un groupe (29) de plusieurs premières bascules, comportant:
- un premier élément (31) de combinaison logique des sorties respectives des bascules du groupe, indépendamment de la fonction donnée à ces bascules, fournissant un signal (s31) et son inverse;
- deux deuxièmes bascules (32, 33);
- un deuxième élément (34) de combinaison logique des sorties respectives des deux deuxièmes bascules fournissant un signal résultat de la détection
**caractérisé en ce**:
- ledit premier élément (31) de combinaison logique provoque un changement d'état desdits signal (s31) et son inverse lors d'une perturbation desdites premières bascules;
- que lesdits signal (s31) et son inverse fournis déclenchent lesdites deuxièmes bascules;
- lesdites deuxièmes bascules reçoivent sur leurs entrées de donnée respectives un même état;
- lesdites deuxièmes bascules reçoivent sur leurs entrées de déclenchement respectives, respectivement lesdits signal (s31) et son inverse fournis par le premier élément de combinaison.
- lesdites deuxièmes bascules reçoivent sur leurs bornes de réinitialisation respectives, un signal impulsionnel (s36) comportant une impulsion au moins à chaque front de déclenchement d'une des premières bascules du groupe;
- ledit deuxième élément (34) de combinaison logique des sorties respectives des deux deuxièmes bascules effectue une fonction logique de type OU.

7. Circuit selon la revendication 6, dans lequel le premier élément de combinaison (31) effectue une combinaison de type OU-Exclusif.

8. Circuit selon l'une quelconque des revendications 6 à 8, dans lequel le signal d'initialisation (s36) est un train d'impulsions périodique de même période que le signal de déclenchement des premières bascules (20).

9. Circuit selon l'une quelconque des revendications 6 à 8, pour la mise en oeuvre, du procédé selon l'une quelconque des revendications 1 à 5.

10. Circuit électronique (10) comportant un circuit de détection (30) conforme à l'une quelconque des revendications 6 à 9.

## Claims

1. A method for detecting a disturbance of a state of at least one first flip-flop (20) from a group (29) of several first flip-flops of an electronic circuit (10), comprising the following steps:
a step of combining the respective outputs of first flip-flops of the group, independently of their functional purpose, to provide a signal (s31) and its inverse;
a step of combining the respective outputs of two second flip-flops to provide a result signal of the detection;
**characterized in that:**
said step of combining the respective outputs of the first flip-flops of the group, causes a change of state of said signal (s31) and its inverse during a disturbance of said first flip-flops;
said provided signal (s31) and its inverse trigger said second flip-flops;
it comprises a step of forcing to a same state data inputs of said second flip-flops;
it comprises a step of initializing said second flip-flops by means of a pulse signal (s36) comprising a pulse at least at each triggering edge of one of the first flip-flops in the group;
said step of combining the respective outputs of second flip-flops is carried out by an OR-type logic function (34).

2. The method of claim 1, wherein the combination (31) of the outputs of the first flip-flops (20) is of XOR type.

3. The method of claim 1 or 2, wherein the initialization signal (s36) of the second flip-flops (32, 33) is a periodic pulse train.

4. The method of claim 3, wherein the initialization signal (s36) is of same period as a trigger signal (Ck) common to the first flip-flops (20).

5. The method of any of claims 1 to 4, wherein the duration of the pulses of the initialization signal (s36) of the second flip-flops (32, 33) is at least equal to the settling time of the first flip-flops (20) plus the combination time of their output signals.

6. A circuit (30) for detecting a disturbance of the state of at least one first flip-flop (20) from a group (29) of several first flip-flops, comprising:
a first element (31) of logic combination of the respective outputs of the flip-flops in the group, independently from the function given to the flip-flops, providing a signal (s31) and its inverse;
two second flip-flops (32, 33);
a second element (34) of logic combination of the respective outputs of the two second flip-flops providing a result signal of the detection;
**characterized in that:**
said first element (31) of logic combination provides a change of state of said signal (s31) and its inverse during a disturbance of said first flip-flops;
said provided signal (s31) and its inverse trigger said second flip-flops;
said second flip-flops receive on their respective data inputs a same state;
said second flip-flops receive on their trigger inputs respectively said signal (s31) and its inverse provided by the first combination element;
said second flip-flops receive on their respective reset inputs a pulse signal (s36) comprising a pulse at least at each triggering edge of one of the first flip-flops in the group;
said second element (34) of logic combination of the respective outputs of the two second flip-flops carries out an OR-type logic function (34).

7. The circuit of claim 6, wherein the first combination element (31) performs an XOR-type combination.

8. The circuit of claim 6 or 7, wherein the initialization signal (s36) is a periodic pulse train of same period as the trigger signal of the first flip-flops (20).

9. The circuit of any of claims 6 to 8, for implementing the method of any of claims 1 to 5.

10. An electronic circuit (10) comprising the detection circuit (30) of any of claims 6 to 9.

## Patentansprüche

1. Verfahren zum Detektieren einer Störung eines Zustands von wenigstens einem ersten Flipflop (20) von einer Gruppe (29) von mehreren ersten Flipflops eines elektronischen Schaltkreises (10), das die folgenden Schritte aufweist:
einen Schritt des Kombinierens der jeweiligen Ausgänge von ersten Flipflops der Gruppe, unabhängig von deren funktionalen Aufgabe, um ein Signal (s31) und seine Inverse bereitzustellen;
einen Schritt des Kombinierens der jeweiligen Ausgänge von zwei zweiten Flipflops um ein Ergebnissignal der Detektion bereitzustellen;
ist durch Folgendes **gekennzeichnet**:
der Schritt des Kombinierens der jeweiligen Ausgänge des ersten Flipflops der Gruppe bewirkt eine Änderung des Zustands des Signals (s31) und seiner Inverse während einer Störung des ersten Flipflops;
das bereitgestellte Signal (s31) und seine Inverse triggern die zweiten Flipflops;
es weist einen Schritt zum Erzwingen von Dateneingaben auf einen selben Zustand der zweiten Flipflops auf;
es weist einen Schritt zum Initialisieren der zweiten Flipflops mittels eines Pulssignals (s36) auf, das einen Puls wenigstens an jeder Triggerkante von einem der ersten Flipflops in der Gruppe aufweist;
der Schritt des Kombinierens der jeweiligen Ausgänge von zweiten Flipflops wird durch eine OR-Typ Logikfunktion (34) durchgeführt.

2. Verfahren nach Anspruch 1, wobei die Kombination (31) der Ausgänge der ersten Flipflops (20) von einem XOR-Typ ist.

3. Verfahren nach Anspruch 1 oder 2, wobei das Initialisierungssignal (s36) der zweiten Flipflops (32,33) ein periodischer Pulszug ist.

4. Verfahren nach Anspruch 3, wobei das Initialisierungssignal (s36) dieselbe Periode wie ein Triggersignal (Ck) hat, das den ersten Flipflops (20) gemein ist.

5. Verfahren nach einem der Ansprüche 1 bis 4, wobei die Dauer der Pulse des Initialisierungssignals (s36) des zweiten Flipflops (32,33) ist wenigstens gleich der Einschwingzeit der ersten Flipflops (20) plus der Kombinationszeit von deren Ausgangssignalen.

6. Ein Schaltkreis (30) zum Detektieren einer Störung eines Zustands von wenigstens einem ersten Flipflop (20) von einer Gruppe (29) von mehreren ersten Flipflops, der Folgendes aufweist:
ein erstes Element (31) einer logischen Kombination von den jeweiligen Ausgängen von den Flipflops in der Gruppe, unabhängig von der Funktion, die für die Flipflops vorgesehen ist, das ein Signal (s31) und seine Inverse bereitstellt;
zwei zweite Flipflops (32,33);
ein zweites Element (34) einer logischen Kombination von den jeweiligen Ausgängen, das zwei zweiten Flipflops ein Ergebnissignal der Detektion bereitstellt;
**dadurch gekennzeichnet, dass:**
das erste Element (31) einer logischen Kombination eine Änderung des Zustands des Signals (s31) und seiner Inverse während einer Störung der ersten Flipflops bereitstellt;
das bereitgestellte Signal (s31) und seine Inverse die zweiten Flipflops triggern;
die zweiten Flipflops an deren jeweiligen Dateneingängen denselben Zustand empfangen;
die zweiten Flipflops an deren Triggereingängen jeweils das Signal (s31) und
seine Inverse, die durch das erste Kombinationselement bereitgestellt werden empfangen;
die zweiten Flipflops an deren jeweiligen Reset Eingängen ein Pulssignal (s36) empfangen, das einen Puls wenigstens an jeder Triggerkante von einem der ersten Flipflops in der Gruppe aufweist;
das zweite Element (34) einer logischen Kombination von den jeweiligen Ausgängen von den zwei zweiten Flipflops eine OR-Typ Logikfunktion (34) ausführt.

7. Schaltkreis gemäß Anspruch 6, wobei das erste Kombinationselement (31) eine XOR-Typ Kombination ausführt.

8. Schaltkreis gemäß Anspruch 6 oder 7, wobei das Initialisierungssignal (s36) ein periodischer Pulszug von gleicher Periode wie das Triggersignal der ersten Flipflops (20) ist.

9. Schaltkreis nach einem der Ansprüche 6 bis 8, zum Implementieren des Verfahrens nach einem der Ansprüche 1 bis 5.

10. Ein elektronischer Schaltkreis (10), der den Detektionsschaltkreis (30) gemäß einem der Ansprüche 6 bis 9 aufweist.
